# EUROPEAN PATENT APPLICATION

(11) **EP 4 832 107 A1**
(43) Date of publication of application: **28.10.2026**
(21) Application number: 24908285.0
(22) Date of filing: 16.12.2024
(51) Int. Cl.: H01M 4/525, H01M 4/505, H01M 4/131, H01M 10/052, H01M 4/02

(54) **POSITIVE ELECTRODE ACTIVE MATERIAL PRECURSOR FOR LITHIUM SECONDARY BATTERY, POSITIVE ELECTRODE ACTIVE MATERIAL FOR LITHIUM SECONDARY BATTERY, AND LITHIUM SECONDARY BATTERY**

(30) Priority: 18.12.2023 KR 20230185141
(71) Applicant: POSCO Holdings Inc., Pohang-si, Gyeongsangbuk-do 37859 (KR)
(72) Inventor: LEE, Sanghyuk, Pohang-si, Gyeongsangbuk-do 37859 (KR); YU, Byongyong, Pohang-si, Gyeongsangbuk-do 37859 (KR); NAM, Sang Cheol, Pohang-si, Gyeongsangbuk-do 37859 (KR); SONG, Junghoon, Pohang-si, Gyeongsangbuk-do 37859 (KR)
(74) Representative: Pfenning, Meinig & Partner mbB
(86) International application number: PCT/KR2024/097016
(87) International publication number: WO 2025/136003

(57) **Abstract**

The present embodiments relate to a positive electrode active material precursor for a lithium secondary battery, a positive electrode active material, and a positive electrode including the same. A positive electrode active material precursor for a lithium secondary battery according to an embodiment is a nickel-containing metal hydroxide comprising nickel in a range of 0.6 mol to 0.75 mol based on 1 mol of a total amount of transition metals, wherein the metal hydroxide may have a zeta potential of -8 mV or more and a specific surface area (BET) in a range of 4 m²/g to 11 m²/g.

## Description

### [TECHNICAL FIELD]

The present embodiments relate to a positive electrode active material precursor for a lithium secondary battery, a positive electrode active material for a lithium secondary battery, and a lithium secondary battery.

### [BACKGROUND ART]

Recently, as environmental issues have become serious, electric vehicles have attracted attention as one of the measures for overcoming such issues. Owing to the explosive demand for such electric vehicles and the demand for increasing driving distance, development of secondary batteries having high capacity and high energy density corresponding thereto is being actively conducted worldwide.

In order to satisfy these demands, research has been actively conducted on secondary batteries employing a bimodal-type positive electrode active material in which large particles and small particles are mixed at a predetermined fraction, in order to improve the density of an electrode plate while using an NCM positive electrode material having a high nickel content.

However, a large-particle positive electrode material composed of secondary particles in which primary particles are aggregated has a large specific surface area of powder and thus a large contact area with an electrolyte solution, resulting in a large amount of gas generation and a decrease in lifespan of a battery due thereto. In addition, due to the characteristics of a high-Ni positive electrode material, degradation becomes severe at high voltage, and thus there is a disadvantage in that lifespan characteristics are very poor.

In order to improve these problems, research has recently been conducted on a technology capable of securing excellent lifespan characteristics while having capacity similar to that of a high-Ni positive electrode material, by using an NCM positive electrode material having a mid-Ni composition with a nickel content of less than 80% at high voltage.

### [DETAILED DESCRIPTION OF THE INVENTION]

### [Technical Problem]

The present embodiments are intended to provide a positive electrode active material precursor for a lithium secondary battery, a positive electrode active material for a lithium secondary battery, and a lithium secondary battery, which have a mid-Ni composition and excellent overall electrochemical performance at high voltage.

### [Technical Solution]

A positive electrode active material precursor for a lithium secondary battery according to an embodiment is a nickel-containing metal hydroxide comprising nickel in a range of 0.6 mol to 0.75 mol based on 1 mol of a total amount of transition metals, wherein the metal hydroxide may have a zeta potential of -8 mV or more and a specific surface area (BET) in a range of 4 m²/g to 11 m²/g.

A positive electrode active material for a lithium secondary battery according to another embodiment is a nickel-containing metal oxide comprising nickel in a range of 0.6 mol to 0.75 mol based on 1 mol of a total amount of transition metals, wherein a zeta potential of the metal oxide may be -0.1 mV or more and a specific surface area (BET) may be in a range of 0.1 m²/g to 1.2 m²/g.

A positive electrode for a lithium secondary battery according to still another embodiment may include the positive electrode active material according to an embodiment.

A lithium secondary battery according to still another embodiment may include the positive electrode for a lithium secondary battery according to an embodiment.

### [Advantageous Effects]

According to the present embodiments, by appropriately controlling zeta potential and specific surface area of a precursor and a positive electrode active material, it is possible to implement a positive electrode active material precursor and a positive electrode active material for a lithium secondary battery, which have a mid-Ni composition and excellent capacity and lifespan characteristics at high voltage.

### [BRIEF DESCRIPTION OF THE DRAWINGS]

FIG. 1 is an SEM image measured at a magnification of 30,000× for a positive electrode active material precursor prepared in Example 1.
FIG. 2 is an SEM image measured at a magnification of 30,000× for a positive electrode active material precursor prepared in Comparative Example 1.
FIG. 3 is an SEM image measured at a magnification of 30,000× for a positive electrode active material prepared in Example 1.
FIG. 4 is an SEM image measured at a magnification of 30,000× for a positive electrode active material prepared in Comparative Example 1.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### Positive Electrode Active Material Precursor for Lithium Secondary Battery

A positive electrode active material precursor for a lithium secondary battery according to an embodiment is a nickel-containing metal hydroxide comprising nickel in a range of 0.6 mol to 0.75 mol based on 1 mol of a total amount of transition metals, wherein the metal hydroxide may have a zeta potential of -8 mV or more and a specific surface area (BET) in a range of 4 m²/g to 11 m²/g.

The metal hydroxide may be secondary particles formed by aggregation of a plurality of primary particles.

In the present specification, "secondary particle" means an aggregate, that is, a secondary structure, in which several tens to several hundreds of primary particles are aggregated by physical or chemical bonding between the primary particles, even without an intentional aggregation or granulation process for the primary particles.

In addition, "primary particle" means a minimum particle unit distinguished as one lump when a cross-section of a positive electrode active material is observed through a scanning electron microscope (SEM), and may be composed of one crystal grain or may be composed of a plurality of crystal grains.

In addition, "crystal grain" means a distinguishable region in which atoms in a primary particle form a lattice structure in a predetermined direction.

The zeta potential of the metal hydroxide may be -8 mV or more, more specifically in a range of -8 mV to 10 mV, -0.5 mV to 7 mV, or 0.01 mV to 5.36 mV.

The zeta potential is an index indicating the degree of surface charge of colloidal particles suspended or dispersed in a medium (water and/or organic solvent). When an electric field is applied to a colloid from the outside, colloidal particles migrate in a direction opposite to the sign of the surface potential thereof, and the zeta potential represents a value calculated by taking into account a particle migration speed, the intensity of the applied electric field, and hydrodynamic effects (viscosity and dielectric constant of a solvent). That is, by quantifying a balance between attractive force and repulsive force that appear when particles approach one another, the stability of a suspension can be confirmed through zeta potential in a system governed by an electrostatic state rather than gravity.

In the present specification, the zeta potential means an average value obtained by dispersing the positive electrode active material precursor or the positive electrode active material in an NMP solvent at 1 mg/ml, and then measuring the same 50 times at 25°C using equipment of Otsuka Electronics ELSZ-1000.

In the present embodiment, the metal hydroxide may be prepared using a coprecipitation process. At this time, the zeta potential of the positive electrode active material precursor may be controlled to satisfy the above range by, for example, appropriately controlling the degree of aggregation of primary particles by appropriately controlling temperature, stirring speed, pH, and the like of the coprecipitation process.

When the zeta potential satisfies the above range, a lithium secondary battery may be implemented, which can secure capacity at a level of a positive electrode active material having a high-Ni composition while having a mid-Ni composition, and which also has excellent resistance characteristics and lifespan characteristics.

The specific surface area (BET) of the metal hydroxide may be in a range of 4 m²/g to 11 m²/g, more specifically 6 m²/g to 9 m²/g or 7 m²/g to 8.25 m²/g. When the specific surface area satisfies the above range, an electrolyte solution penetrates into the inside of the metal hydroxide particles, and when gas is generated inside the particles, the gas can be smoothly discharged, so that initial capacity can be excellent and long-term lifespan at high voltage can be improved.

In the present specification, the specific surface area (BET) may be measured using HM Model-1201 equipment manufactured by Macsorb.

Meanwhile, the positive electrode active material precursor may satisfy the following Equation 1. [Equation 1] $\left(A+B\right) / B > 0.5$

In Equation 1, A is the zeta potential of the nickel-containing metal hydroxide, and B is the specific surface area (BET) of the nickel-containing metal hydroxide. More specifically, Equation 1 may be in a range of 0.5 to 2 or 1 to 1.5. When the value of Equation 1 satisfies the above range, the degree of particle aggregation is dense, thereby increasing particle strength and chemical and physical stability, and the BET is not excessive or insufficient, so that gas discharge is smooth and the electrolyte solution can rapidly penetrate into the inside of particles. Accordingly, excellent lifespan characteristics of the positive electrode active material under high voltage can be secured while having a mid-Ni composition.

Next, the positive electrode active material precursor may have an intensity ratio (I₁₀₁/I₀₀₁) of a (101) plane to a (001) plane of 0.4 or more, and more specifically in a range of 0.4 to 1.0, when analyzed by XRD.

In the present specification, the intensity ratio (I₁₀₁/I₀₀₁) of the (101) plane to the (001) plane may be measured using XRD equipment manufactured by Panalytical.

The structure of particles formed in the positive electrode active material precursor varies depending on coprecipitation conditions, and this can be confirmed through XRD pattern analysis. When XRD analysis of the positive electrode active material precursor is performed, a peak generated around about 18 degrees indicates the intensity for the (001) plane, and a peak generated around about 38 degrees indicates the intensity for the (101) plane.

The average particle diameter (D50) of the nickel-containing metal hydroxide may be in a range of 9 µm to 13 µm. When the average particle diameter of the hydroxide satisfies the above range, empty spaces between active materials are reduced during manufacture of a positive electrode, and lithium mobility and ionic conductivity in the electrode are increased. In addition, particle strength of the active material itself is increased, and due thereto, the electrode coating process can be performed at a high speed, thereby providing an effect of reducing process costs, and a lithium secondary battery having excellent electrochemical characteristics such as lifespan characteristics and resistance increase rate can be implemented.

The nickel-containing metal hydroxide may include nickel in a range of 0.6 mol to 0.75 mol, and more specifically 0.6 mol to 0.7 mol, based on 1 mol of the total amount of transition metals.

In addition, the nickel-containing metal hydroxide may further include manganese, and the content of manganese may be 0.4 mol or less, more specifically in a range of 0.2 mol to 0.4 mol or 0.3 mol to 0.4 mol, based on 1 mol of the total amount of transition metals included in the nickel-containing metal hydroxide.

Specifically, the nickel-containing metal hydroxide may be represented by the following Chemical Formula 1.

[Chemical Formula 1] NiₓCo_{y}Mn_{z}M1_{w}(OH)₂

In Chemical Formula 1, 0.60≤x≤0.75, 0≤y≤0.1, 0<z≤0.4, 0≤w≤0.02, x+y+z+w=1, and M1 includes one or more of B, Al, Zr, Mg, Ti, Nb, W, Sc, Si, V, Fe, Y, Mo, Ce, Hf, Ta, La, and Sr.

That is, since the metal hydroxide of the present embodiment has a composition containing no cobalt or a small amount of cobalt, manufacturing costs can be reduced.

### Positive Electrode Active Material for Lithium Secondary Battery

A positive electrode active material for a lithium secondary battery according to an embodiment is a nickel-containing metal oxide comprising nickel in a range of 0.6 mol to 0.75 mol based on 1 mol of a total amount of transition metals, wherein the metal oxide may have a zeta potential of -0.1 mV or more and a specific surface area (BET) in a range of 0.1 m²/g to 1.2 m²/g.

In the present embodiment, the zeta potential of the metal oxide may be -0.1 mV or more, more specifically in a range of -0.1 mV to 10 mV, 0.05 mV to 6.5 mV, or 0.18 mV to 5.42 mV. When the zeta potential of the positive electrode active material precursor for a lithium secondary battery satisfies the above-described range, the zeta potential of the positive electrode active material prepared using the same satisfies the range of the present embodiment.

When the zeta potential satisfies the above range, a lithium secondary battery may be implemented, which can secure capacity at a level of a positive electrode active material having a high-Ni composition while having a mid-Ni composition, and which also has excellent resistance characteristics and lifespan characteristics.

The specific surface area (BET) of the metal oxide may be in a range of 0.1 m²/g to 1.2 m²/g, more specifically 0.3 m²/g to 0.8 m²/g or 0.4 m²/g to 0.65 m²/g. When the specific surface area satisfies the above range, initial capacity of the prepared positive electrode active material can be improved. In addition, due to internal pores present in the positive electrode active material, movement of Li becomes smooth, and even when gas is generated inside, the gas can be smoothly discharged. Due thereto, lifespan characteristics are also improved, and a positive electrode active material having high stability can be manufactured.

The positive electrode active material may satisfy the following Equation 2. [Equation 2] $\left(C+D\right) / D > 0$

In Equation 2, C is the zeta potential of the nickel-containing metal oxide, and D is the specific surface area (BET) of the nickel-containing metal oxide. When the value of Equation 2 satisfies the above range, excellent lifespan characteristics of the positive electrode active material under high voltage can be secured while having a mid-Ni composition.

The metal oxide may have a layered crystal structure.

In addition, the nickel-containing metal oxide includes secondary particles in which a plurality of primary particles are aggregated. The average particle diameter (D50) of the nickel-containing metal oxide may be in a range of 9 µm to 13 µm. When the average particle diameter of the metal oxide satisfies the above range, empty spaces between active materials are reduced during manufacture of a positive electrode, and lithium mobility and ionic conductivity in the electrode are increased. In addition, particle strength of the active material itself is increased, and due thereto, the electrode coating process can be performed at a high speed, thereby providing an effect of reducing process costs, and a lithium secondary battery having excellent electrochemical characteristics such as lifespan characteristics and resistance increase rate can be implemented.

The nickel-containing metal oxide may include nickel in a range of 0.6 mol to 0.75 mol, and more specifically 0.6 mol to 0.7 mol, based on 1 mol of the total amount of transition metals.

In addition, the nickel-containing metal oxide may further include manganese, and the content of manganese may be 0.4 mol or less, more specifically in a range of 0.2 mol to 0.4 mol or 0.3 mol to 0.4 mol, based on 1 mol of the total amount of transition metals included in the nickel-containing metal oxide.

Specifically, the nickel-containing metal oxide may be represented by the following Chemical Formula 2.

[Chemical Formula 2] Liₐ[NiₓCo_{y}Mn_{z}M1_{w}]O₂

In Chemical Formula 2, 0.8≤a≤1.2, 0.60≤x≤0.75, 0≤y≤0.1, 0<z≤0.4, 0≤w≤0.02, x+y+z+w=1, and M1 includes one or more of B, Al, Zr, Mg, Ti, Nb, W, Sc, Si, V, Fe, Y, Mo, Ce, Hf, Ta, La, and Sr.

That is, since the metal oxide of the present embodiment has a composition containing no cobalt or a small amount of cobalt, manufacturing costs can be reduced.

### Positive Electrode

Another embodiment provides a positive electrode including a current collector and a positive electrode active material layer positioned on one surface of the current collector and including the positive electrode active material according to the above-described embodiment.

The characteristics of the positive electrode active material constituting the positive electrode active material layer are the same as those described above. Accordingly, a detailed description of the positive electrode active material will be omitted.

The current collector may be, for example, stainless steel, aluminum, nickel, titanium, calcined carbon, or aluminum or stainless steel surface-treated with carbon, nickel, titanium, silver, or the like.

Meanwhile, the positive electrode active material layer may include a binder and a conductive material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 wt% to 30 wt% based on the total weight of the positive electrode active material layer.

The conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 wt% to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

### Lithium Secondary Battery

Still another embodiment provides a lithium secondary battery including the positive electrode.

The lithium secondary battery may specifically include a positive electrode, a negative electrode positioned to face the positive electrode, a separator and an electrolyte interposed between the positive electrode and the negative electrode, and the positive electrode is as described above. In addition, the lithium secondary battery may optionally further include a battery case accommodating an electrode assembly including the positive electrode, the negative electrode, and the separator, and a sealing member sealing the battery case.

In the lithium secondary battery, the negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 µm to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including a negative electrode active material and optionally including a binder and a conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiOβ (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

Next, a separator may be present between the positive electrode and the negative electrode depending on the type of the lithium secondary battery. As such a separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, or a polypropylene/polyethylene/polypropylene three-layer separator may also be used.

In addition, in the lithium secondary battery, examples of the electrolyte may include an organic liquid electrolyte, an inorganic liquid electrolyte, a solid polymer electrolyte, a gel-type polymer electrolyte, a solid inorganic electrolyte, a molten-type inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 M to 2.0 M. When the concentration of the lithium salt is within the above range, the electrolyte has appropriate conductivity and viscosity, and thus excellent electrolyte performance can be exhibited and lithium ions can effectively move.

As described above, since the lithium secondary battery including the positive electrode active material according to the present invention stably exhibits excellent discharge capacity, output characteristics, and capacity retention rate, the lithium secondary battery is useful for portable devices such as mobile phones, notebook computers, and digital cameras, and in the field of electric vehicles such as hybrid electric vehicles (HEVs).

### [MODE FOR CARRYING OUT THE INVENTION]

Hereinafter, embodiments of the present invention will be described in detail. However, these are provided as examples, and the present invention is not limited thereto, and the present invention is only defined by the scope of the claims to be described below.

### Comparative Example 1

### (1) Preparation of Positive Electrode Active Material Precursor

NiSO₄·6H₂O was used as a nickel raw material, CoSO₄·7H₂O was used as a cobalt raw material, and MnSO₄·H₂O was used as a manganese raw material. These raw materials were dissolved in distilled water to prepare a metal salt aqueous solution.

After a coprecipitation reactor was prepared, N₂ was purged to prevent oxidation of metal ions during a coprecipitation reaction, and the temperature of the reactor was maintained at 48°C.

NH₄(OH) was introduced into the coprecipitation reactor as a chelating agent, and NaOH was used to adjust pH. A precipitate obtained according to the coprecipitation process was filtered, washed with distilled water, and then dried in an oven at 100°C for 24 hours to prepare a positive electrode active material precursor. The pH range of the coprecipitation step was adjusted to a range of 11.0 to 12.0, the total coprecipitation time was 40 hours, and the precursor was prepared by a concentration process. At this time, the flow rate of the metal sulfate solution was 10 L/hr.

The composition of the prepared precursor was (Ni_{0.6}Co_{0.01}Mn_{0.03})(OH)₂, and the average particle diameter (D50) was in a range of 9 µm to 13 µm.

### (2) Preparation of Positive Electrode Active Material

LiOH·H₂O (Samchun Chemicals, battery grade) was uniformly mixed with the precursor prepared in (1) at a molar ratio of 1:1.07 to prepare a mixture, and then the mixture was calcined in a box-type calcination furnace into which oxygen was introduced at 40 mL/min.

Specifically, after preliminary calcination at 480°C for 5 hours, primary calcination was performed by maintaining the mixture at 700°C to 780°C for 12 hours, and the temperature increase rate was 2.5°C/min. Next, secondary calcination was performed by maintaining the mixture at 850°C to 920°C for 10 to 20 hours.

The composition of the positive electrode active material prepared as described above was LiNi₀.₆₀Co₀.₁₀Mn₀.₃₀O₂.

### Examples 1 to 2

A precursor and a positive electrode active material were prepared in the same manner as in Comparative Example 1, except that the zeta potential was adjusted as shown in Table 1 by controlling the precursor composition and the degree of aggregation through pH and stirring speed during coprecipitation.

### Comparative Example 2

A precursor and a positive electrode active material were prepared in the same manner as in Comparative Example 1, except that a precursor having a composition of (Ni_{0.70}Mn_{0.30})(OH)₂ was prepared by adjusting the mixing ratio of metal raw materials.

### Examples 3 and 4

A precursor and a positive electrode active material were prepared in the same manner as in Comparative Example 2, except that the zeta potential was adjusted as shown in Table 1 by controlling the degree of aggregation through pH and stirring speed during coprecipitation.

### Comparative Example 3

A precursor and a positive electrode active material were prepared in the same manner as in Comparative Example 1, except that a precursor having a composition of (Ni₀.₆₉Co₀.₀₂Mn₀.₂₉)(OH)₂ was prepared by adjusting the mixing ratio of metal raw materials.

### Examples 5 and 6

A precursor and a positive electrode active material were prepared in the same manner as in Comparative Example 3, except that the zeta potential was adjusted as shown in Table 1 by controlling the degree of aggregation through pH and stirring speed during coprecipitation.

### Comparative Example 4

A precursor and a positive electrode active material were prepared in the same manner as in Comparative Example 1, except that a precursor having a composition of (Ni_{0.60}Mn_{0.40})(OH)₂ was prepared by adjusting the mixing ratio of metal raw materials.

### Examples 7 and 8

A precursor and a positive electrode active material were prepared in the same manner as in Comparative Example 4, except that the zeta potential was adjusted as shown in Table 1 by controlling the degree of aggregation through pH and stirring speed during coprecipitation.

**[Table 1]**

| Class ificat ion | Composition | Final Precursor XRD (101)/(001) | Zeta Potential of Precursor | Secondary Calcination Temperature (°C) | Secondar y Calcinati on Holding Time (hr) |
|---|---|---|---|---|---|
| Com parat ive Exa mple 1 | Ni_{0.60}Co_{0.10}Mn_{0.30} | 0.297 | -22.3 | 850~920 | 10~20 |
| Exa mple 1 | Ni_{0.60}Co_{0.10}Mn_{0.30} | 0.62 | 0.11 | 850~920 | 10~20 |
| Exa mple 2 | Ni_{0.60}Co_{0.10}Mn_{0.30} | 0.629 | 3.45 | 850~920 | 10~20 |
| Com parat ive Exa mple 2 | Ni_{0.70}Mn_{0.30} | 0.386 | -20.51 | 820~860 | 10~20 |
| Exa mple 3 | Ni_{0.70}Mn_{0.30} | 0.58 | 0.88 | 820~860 | 10~20 |
| Exa mple 4 | Ni_{0.70}Mn_{0.30} | 0.614 | 5.36 | 820~860 | 10~20 |
| Com parat ive Exa mple 3 | Ni_{0.69}Co_{0.02}Mn_{0.29} | 0.32 | -9.35 | 830~870 | 10~20 |
| Exa mple 5 | Ni_{0.69}Co_{0.02}Mn_{0.29} | 0.708 | 0.35 | 830~870 | 10~20 |
| Exa mple 6 | Ni_{0.69}Co_{0.02}Mn_{0.29} | 0.685 | 4.97 | 830~870 | 10~20 |
| Com parat ive Exa mple 4 | Ni_{0.60}Mn_{0.40} | 0.158 | -8.14 | 880~950 | 10~20 |
| Exa mple 7 | Ni_{0.60}Mn_{0.40} | 0.59 | 0.09 | 880~950 | 10~20 |
| Exa mple 8 | Ni_{0.60}Mn_{0.40} | 0.616 | 3.5 | 880~950 | 10~20 |

### Experimental Example 1 - Particle Analysis

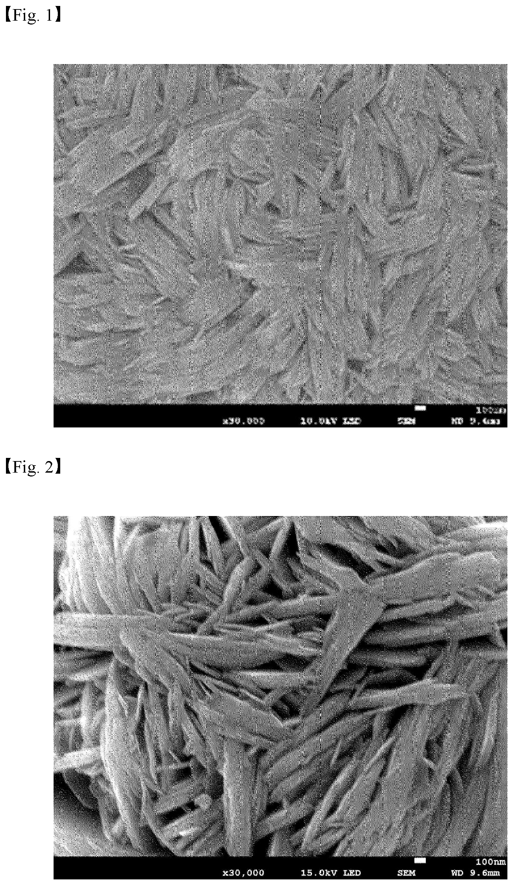

FIG. 1 is an SEM image measured at a magnification of 30,000× for the positive electrode active material precursor prepared in Example 1, and FIG. 2 is an SEM image measured at a magnification of 30,000× for the positive electrode active material precursor prepared in Comparative Example 1.

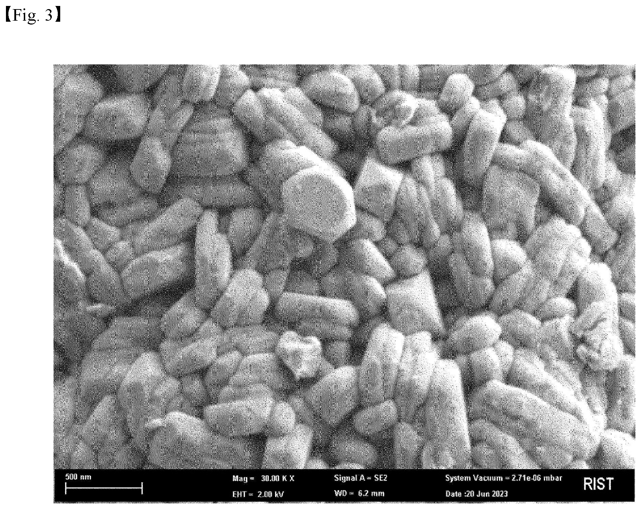

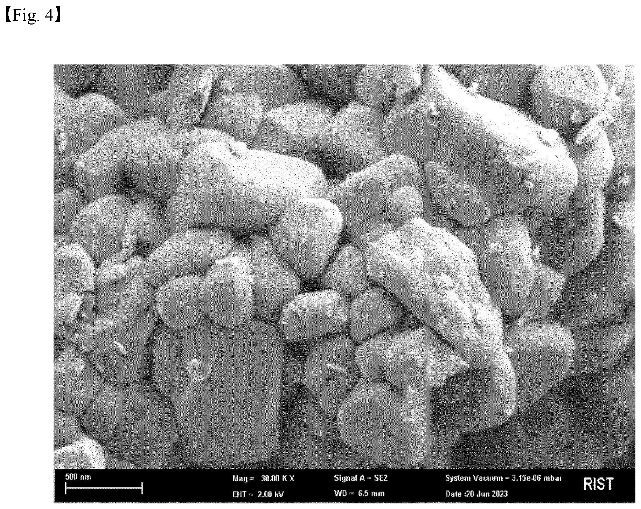

FIG. 3 is an SEM image measured at a magnification of 30,000× for the positive electrode active material prepared in Example 1, and FIG. 4 is an SEM image measured at a magnification of 30,000× for the positive electrode active material prepared in Comparative Example 1.

Referring to FIGS. 1 and 2, it can be confirmed that the precursor of Example 1 has a compact precursor formed by aggregation of more primary particles, as compared with the precursor prepared according to Comparative Example 1.

In addition, referring to FIGS. 3 and 4, it can be confirmed that the primary particles included in the positive electrode active material of Example 1 are more uniformly distributed than those of the positive electrode active material of Comparative Example 1.

This is considered to be because the degree of aggregation of particles was changed by controlling the zeta potential value during manufacture of the precursor.

### Experimental Example 2 - Method for Analyzing Physical Properties

### (1) XRD Measurement

The precursors prepared in the Examples and Comparative Examples were fixed to a holder and then measured using XRD equipment manufactured by Panalytical under conditions shown in Table 2 below.

**[Table 2]**

| XRD(X-Ray Diffractometer) EMPYREAN Maker | PANalytical |
|---|---|
| Anode material | Cu |
| K-Alpha1 wavelength | 1.540598 Å |
| Generator voltage | 45 kV |
| Tube current | 40 mA |
| Scan Range | 10~90° |
| Scan Step Size | 0.0065° |
| Divergence slit | 1/4° |
| Antiscatter slit | 1/2° |

### (2) Measurement of Zeta Potential Value

The precursors and positive electrode active materials prepared in the Examples and Comparative Examples were dispersed in an NMP solvent at 1 mg/ml using Otsuka Electronics ELSZ-1000 equipment, and then measured 50 times at 25°C, and an average value was represented.

### (3) BET Measurement

The precursors and positive electrode active materials of the Examples and Comparative Examples were sampled, and then a specific surface area (BET) was measured using HM Model-1201 equipment manufactured by Macsorb.

**[Table 3]**

| Classifi cation | Composition | Precursor XRD (101)/(001) | Zeta Potential of Precursor | Precursor BET (m²/g) | Zeta Potential of Positive Electrode Active Material | BET of Positive Electrode Active Material (m²/g) |
|---|---|---|---|---|---|---|
| Compa rative Examp le 1 | Ni_{0.60}Co_{0.10}Mn_{0.30} | 0.297 | -22.3 | 12.17 | -20.51 | 0.82 |
| Examp le 1 | Ni_{0.60}Co_{0.10}Mn_{0.30} | 0.62 | 0.11 | 7.92 | 0.65 | 0.623 |
| Examp le 2 | Ni_{0.60}Co_{0.10}Mn_{0.30} | 0.629 | 3.45 | 8.23 | 3.29 | 0.618 |
| Compa rative Examp le 2 | Ni_{0.70}Mn_{0.30} | 0.386 | -20.51 | 10.31 | -23.23 | 0.556 |
| Examp le 3 | Ni_{0.70}Mn_{0.30} | 0.58 | 0.88 | 7.16 | 1.11 | 0.416 |
| Examp le 4 | Ni_{0.76}Mn_{0.30} | 0.614 | 5.36 | 7.43 | 4.18 | 0.421 |
| Compa rative Examp le 3 | Ni_{0.69}Co_{0.02}Mn_{0.29} | 0.32 | -9.35 | 11.49 | -7.24 | 0.48 |
| Examp le 5 | Ni_{0.69}Co_{0.02}Mn_{0.29} | 0.708 | 0.35 | 7.9 | -0.15 | 0.465 |
| Examp le 6 | Ni_{0.69}Co_{0.02}Mn_{0.29} | 0.685 | 4.97 | 7.48 | 5.42 | 0.458 |
| Compa rative Examp le 4 | Ni_{0.66}Mn_{0.40} | 0.158 | -8.14 | 15.19 | -9.06 | 0.732 |
| Examp le 7 | Ni_{0.60}Mn_{0.40} | 0.59 | 0.09 | 7.78 | 0.18 | 0.545 |
| Examp le 8 | Ni_{0.66}Mn_{0.40} | 0.616 | 3.5 | 7.08 | 3.91 | 0.596 |

Referring to Table 3, it can be seen that the precursors and positive electrode active materials prepared in Examples 1 to 8 have zeta potential and specific surface area values satisfying the ranges of the present embodiments. In contrast, the zeta potential and specific surface area values of the precursors and positive electrode active materials prepared in Comparative Examples 1 to 4 are outside the ranges of the present embodiments.

### Experimental Example 3 - Evaluation of Electrochemical Characteristics

### (1) Manufacture of Coin-Type Half Cell

A CR2032 coin cell was manufactured using the positive electrode active material prepared as described above, and electrochemical evaluation was performed.

Specifically, the positive electrode active material, a conductive material (Denka Black), and a polyvinylidene fluoride binder (product name: KF1100) were mixed at a weight ratio of 96.5:1.5:2, and the mixture was added to an N-methyl-2-pyrrolidone solvent such that a solid content was about 30 wt%, thereby preparing a positive electrode active material slurry.

The slurry was coated on an aluminum foil (Al foil, thickness: 15 µm), which is a positive electrode current collector, using a doctor blade, dried, and then rolled to manufacture a positive electrode. The loading amount of the positive electrode was about 16.8 mg/cm², and the rolling density was about 3.6 g/cm³.

A 2032 coin-type half cell was manufactured by a conventional method using the positive electrode, a lithium metal negative electrode (thickness: 300 µm, MTI), an electrolyte solution, and a polypropylene separator. The electrolyte solution was prepared and used by dissolving 1 M LiPF₆ in a mixed solvent of ethylene carbonate, dimethyl carbonate, and ethyl methyl carbonate (EMC) (mixing ratio EC:DMC:EMC=3:4:3 volume%).

### (2) Evaluation of Charge/Discharge Characteristics

After the coin-type half cell manufactured in (1) above was aged at room temperature (25°C) for 10 hours, a charge/discharge test was performed.

For capacity evaluation, 200 mAh/g was used as a reference capacity, and constant current (CC)/constant voltage (CV), 2.5 V to 4.45 V, and 1/20 C cut-off were applied as charge/discharge conditions. Initial capacity was measured by performing 0.1 C charge/0.1 C discharge, and then 0.2 C charge/0.2 C discharge.

### (3) Evaluation of Room-Temperature and High-Temperature Cycle Lifespan Characteristics

Room-temperature cycle lifespan characteristics were measured 30 times under 1.0 C charge/1.0 C discharge conditions at room temperature (25°C), and high-temperature cycle lifespan characteristics were measured 30 times under 1.0 C charge/1.0 C discharge conditions at high temperature (45°C).

### (4) Measurement of Initial Resistance and Resistance Increase Rate

Room-temperature initial resistance (direct current internal resistance: DC-IR) was calculated by performing charge/discharge cycles of a battery at 25°C, applying a discharge current at 4.25 V charge 100%, and then measuring a voltage value after 60 seconds.

The high-temperature resistance increase rate was recorded by measuring resistance after 30 cycles of cycle lifespan at high temperature (45°C) using the same method as the initial resistance measurement method, relative to the resistance initially measured at high temperature (high-temperature initial resistance), and converting the increase rate into a percentage (%).

**[Table 4]**

| Classification | Discharge Capacity (mAh/g) | Rate (2C/0.1C) | Initial Resistance (0.2C, Ω) | Resistance Increase Rate (%) | Lifespan Characteristics (%) |
|---|---|---|---|---|---|
| Comparative Example 1 | 179 | 78.5 | 38.8 | 154.2 | 91 |
| Example 1 | 195.2 | 83.5 | 23.4 | 68.8 | 98.8 |
| Example 2 | 195.6 | 84.1 | 21.9 | 61.5 | 98.4 |
| Comparative Example 2 | 196.6 | 84.3 | 39 | 215.1 | 94.8 |
| Example 3 | 208.2 | 85.2 | 23.6 | 53.2 | 98.4 |
| Example 4 | 210.2 | 86.8 | 23.8 | 42.8 | 98.6 |
| Comparative Example 3 | 197.7 | 84 | 35.8 | 184.2 | 92.2 |
| Example 5 | 207.5 | 85.9 | 24.7 | 45.6 | 97.9 |
| Example 6 | 210.5 | 86.6 | 22 | 51.6 | 98.8 |
| Comparative Example 4 | 187.1 | 77.1 | 37.4 | 142.2 | 92.1 |
| Example 7 | 191.6 | 83.9 | 24.4 | 72.1 | 99.6 |
| Example 8 | 190.8 | 83.1 | 25.4 | 65.8 | 99.5 |

Referring to Table 4, it can be seen that, in the case of Examples 1 to 8 in which the zeta potential and specific surface area of the positive electrode active material precursor and the positive electrode active material satisfy the ranges of the present embodiments, overall electrochemical characteristics such as capacity, output characteristics, initial resistance, resistance increase rate, and lifespan characteristics are improved. This is considered to be because, as the zeta potential value is controlled, the degree of particle aggregation is changed, thereby improving overall electrochemical characteristics and, at the same time, reducing side reactions with the electrolyte solution, thereby improving lifespan characteristics. In contrast, in the case of Comparative Examples 1 to 4, it can be confirmed that initial capacity is reduced and output characteristics, resistance characteristics, and capacity retention rate are all deteriorated, as compared with the Examples.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A positive electrode active material precursor for a lithium secondary battery, the positive electrode active material precursor being a nickel-containing metal hydroxide comprising nickel in a range of 0.6 mol to 0.75 mol based on 1 mol of a total amount of transition metals,
wherein the metal hydroxide has a zeta potential of -8 mV or more, and
wherein the metal hydroxide has a specific surface area (BET) in a range of 4 m²/g to 11 m²/g.

2. The positive electrode active material precursor for a lithium secondary battery of claim 1,
wherein the positive electrode active material precursor satisfies the following Equation 1: [Equation 1] $\left(A+B\right) / B > 0.5$
wherein, in Equation 1,
A is the zeta potential of the nickel-containing metal hydroxide, and
B is the specific surface area (BET) of the nickel-containing metal hydroxide.

3. The positive electrode active material precursor for a lithium secondary battery of claim 1,
wherein, when analyzed by XRD, the positive electrode active material precursor has an intensity ratio (I₁₀₁/I₀₀₁) of a (101) plane to a (001) plane of 0.4 or more.

4. The positive electrode active material precursor for a lithium secondary battery of claim 1,
wherein the zeta potential is an average value repeatedly measured 50 times at 25°C.

5. The positive electrode active material precursor for a lithium secondary battery of claim 1,
wherein an average particle diameter (D50) of the nickel-containing metal hydroxide is in a range of 9 µm to 13 µm.

6. The positive electrode active material precursor for a lithium secondary battery of claim 1,
wherein the nickel-containing metal hydroxide comprises secondary particles in which a plurality of primary particles are aggregated.

7. The positive electrode active material precursor for a lithium secondary battery of claim 1,
wherein the nickel-containing metal hydroxide further comprises manganese, and
wherein a content of the manganese is 0.4 mol or less based on 1 mol of the total amount of transition metals included in the nickel-containing metal hydroxide.

8. The positive electrode active material precursor for a lithium secondary battery of claim 1,
wherein the nickel-containing metal hydroxide is represented by the following Chemical Formula 1:
[Chemical Formula 1] NiₓCo_{y}Mn_{z}M1_{w}(OH)₂
wherein, in Chemical Formula 1, 0.60≤x≤0.75, 0≤y≤0.1, 0<z≤0.4, 0≤w≤0.02, x+y+z+w=1, and M1 comprises one or more of B, Al, Zr, Mg, Ti, Nb, W, Sc, Si, V, Fe, Y, Mo, Ce, Hf, Ta, La, and Sr.

9. A positive electrode active material for a lithium secondary battery, the positive electrode active material being a nickel-containing metal oxide comprising nickel in a range of 0.6 mol to 0.75 mol based on 1 mol of a total amount of transition metals,
wherein the metal oxide has a zeta potential of -0.1 mV or more, and
wherein the metal oxide has a specific surface area (BET) in a range of 0.1 m²/g to 1.2 m²/g.

10. The positive electrode active material for a lithium secondary battery of claim 9,
wherein the positive electrode active material satisfies the following Equation 2: [Equation 2] $\left(C+D\right) / D > 0$ wherein, in Equation 2,
C is the zeta potential of the nickel-containing metal oxide, and
D is the specific surface area (BET) of the nickel-containing metal oxide.

11. The positive electrode active material for a lithium secondary battery of claim 9,
wherein the zeta potential is an average value repeatedly measured 50 times at 25°C.

12. The positive electrode active material for a lithium secondary battery of claim 9,
wherein an average particle diameter (D50) of the nickel-containing metal oxide is in a range of 9 µm to 13 µm.

13. The positive electrode active material for a lithium secondary battery of claim 9,
wherein the nickel-containing metal oxide comprises secondary particles in which a plurality of primary particles are aggregated.

14. The positive electrode active material for a lithium secondary battery of claim 9,
wherein the nickel-containing metal oxide further comprises manganese, and
wherein a content of the manganese is 0.4 mol or less based on 1 mol of the total amount of transition metals included in the nickel-containing metal oxide.

15. The positive electrode active material for a lithium secondary battery of claim 9,
wherein the nickel-containing metal oxide is represented by the following Chemical Formula 2:
[Chemical Formula 2] Liₐ[NiₓCo_{y}Mn_{z}M1_{w}]O₂
wherein, in Chemical Formula 2, 0.8≤a≤1.2, 0.60≤x≤0.75, 0≤y≤0.1, 0<z≤0.4, 0≤w≤0.02, x+y+z+w=1, and M1 comprises one or more of B, Al, Zr, Mg, Ti, Nb, W, Sc, Si, V, Fe, Y, Mo, Ce, Hf, Ta, La, and Sr.

16. A positive electrode for a lithium secondary battery, comprising the positive electrode active material of claim 9.

17. A lithium secondary battery comprising the positive electrode for a lithium secondary battery of claim 16.
